Europäisches Patentamt

European Patent Office

Office européen des brevets

(19)

(11) Publication number: **0 109 950**

**A1**

(12) # EUROPEAN PATENT APPLICATION

(21) Application number: **83850292.0**

(22) Date of filing: **02.11.83**

(51) Int. Cl.³: **B 65 G 1/10**
**B 65 G 1/06**

(30) Priority: **22.11.82 SE 8206646**

(43) Date of publication of application:
**30.05.84 Bulletin 84/22**

(84) Designated Contracting States:
**BE CH DE GB LI NL**

(71) Applicant: **ELECTROLUX CONSTRUCTOR AKTIEBOLAG**
**P.O.Box 122**
**S-661 00 Säffle(SE)**

(72) Inventor: **Viklund, Ake Emanuel**
**Atlasgatan 2**
**S-661 00 Säffle(SE)**

(72) Inventor: **Janson, Claes Göran**
**Nävervägen 4**
**S-661 00 Säffle(SE)**

(74) Representative: **Hagelbäck, Evert Isidor et al,**
**c/o AB Electrolux Patentavdelningen**
**S-105 45 Stockholm(SE)**

(54) System for storing elongate goods, such as tubes, beams and the like, and a method of removing elongate goods from such a system.

(57) This invention relates to a system for storing elongate goods, such as tubes, beams or the like. The system comprises a rack having two separate end walls (10, 10a) supporting several carriages (16, 16a). The carriages support a crate (22) in which the elongate goods are stored. Several carriages are placed beside and above one another on horizontal guides (12, 12a) so that the crates form several lines and columns. Above the rack there is a handling means (14) which is movable in the same direction as the carriages. The handling means can be brought in line with any selected column of crates and, by separation of the carriages on the levels above the level on which the goods are placed, lower a lifting means (24) and lift the goods vertically and move them to the end of the rack where the goods are unloaded.

The invention also relates to a method of removing elongate goods from the above system.

Fig.1

EP 0 109 950 A1

Croydon Printing Company Ltd.

System for storing elongate goods, such as tubes, beams and the like,
and a method of removing elongate goods from such a system

This invention relates to a system for storing elongate goods, such as tubes, beams and the like, and to a method of removing elongate goods from such a system.

Goods of the above type are usually stored directly on so-called branch-racks, i.e. racks with central vertical posts and horizontal arms which extend therefrom and on which the goods are placed.

It is also common to store elongate goods in crates which are piled in suitable storage racks by means of fork trucks or trolleys.

Racks of the above type have the drawback that the handling of the material requires space since it is necessary to have passageways between each pair of racks, and the width of these passageways must be at least equal to that of the trucks or crates being used.

It is also previously known to use a storage system for elongate goods in which the goods are placed in compartments, a great number of which being situated beside and above one another. In these systems one end of the goods is placed on a carriage movable in the compartment and then the goods are inserted in the compartment. This system of material handling, however, needs space outside the end wall of the compartment which space must be as large as the length of the goods.

A system has also been tried in which the goods are placed in crates which are packed together beside and above one another, the crates having wheels running on the bed of crates below. By separating the crates in the different beds it is possible to form vertical openings so that a selected crate can be lifted through such an opening by means of a trolley and be moved over the rack to a place for unloading. It has turned out, however, that this system does not work satisfactorily, partly because the rolling movement of the wheels will be hindered if the crates are not placed in an exactly correct position relative to one another, partly because the packing will not be compact enough. The latter drawback depends on the fact that for each bed of crates in the height direction the number of crates has to be reduced by one crate in order to make all crates accessible. Under certain conditions this has to be done by changing places of the crates vertically in the system to allow for a bed below to serve as a runway for a bed above. Thus, the goods have no fixed position in the storage.

This invention makes it possible to achieve a maximum of compact packing of elongate goods within a limited space, in which the goods are directly and individually accessible by means of a trolley or the like at the same time as the number of crates which can be removed from the system is not limited. This is achieved according to the invention by a system with the characteristic features as defined in the following claims.

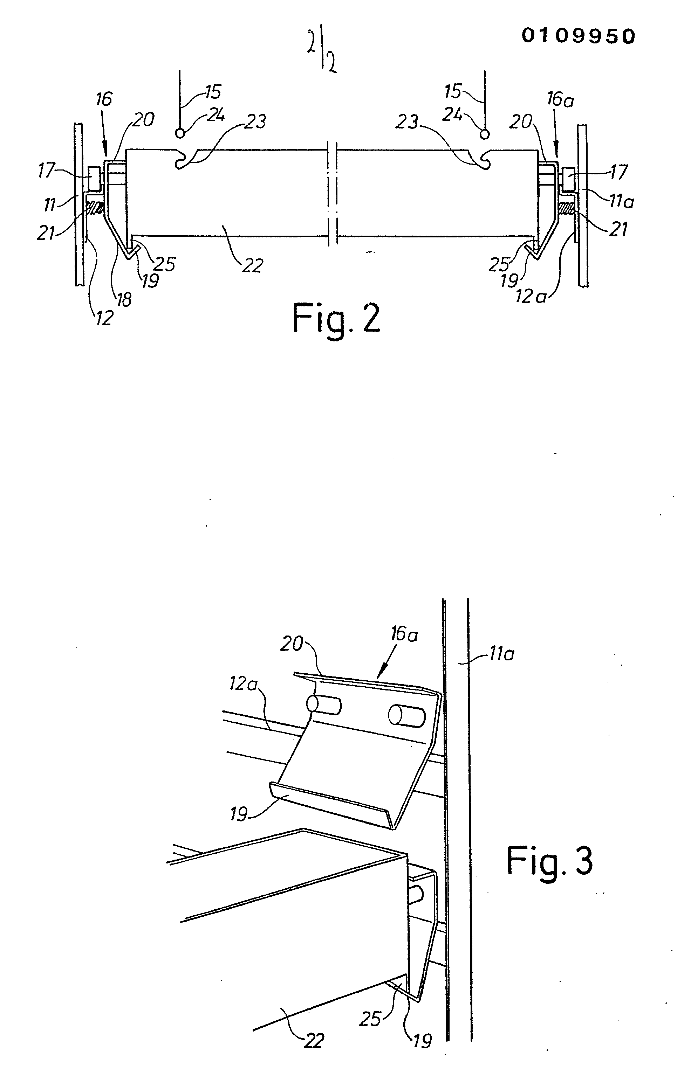

An embodiment of the invention will now be described with reference to the accompanying drawings in which Fig. 1 is a perspective view showing a system according to the invention, Fig. 2 is a vertical section through the system and Fig. 3 is a view of a carriage included in the system.

The system comprises two end walls 10, 10a consisting of posts 11, 11a and several horizontal rail parts 12, 12a extending between the posts and being firmly connected to them. The rail parts 12, 12a are placed on different levels and are preferably situated at equal distance from one another. To the upper part of the posts a rail 13, 13a is fastened which extends a short distance out from the end walls. The rails 13, 13a support a trolley 14 which by an electric motor, not shown, can be moved to any selected position on the rails, the trolley having several wires 15 which by means of a motor, not shown, can be lifted and lowered between the different levels in the system. On the rail parts 12, 12a several carriages 16, 16a are movable, each one having two wheels 17. The carriages are disposed oppositely in pairs and comprise a mainly vertical steel plate 18 to which the wheels 17 are fastened. The lower part of the plate has a bent portion 19, which serves as a holding means for the crate and is directed inwards in the direction of the other end wall, and an upper portion 20 which is similarly bent and serves as a pressing means. Between the lower part of the plate 18 and the respective rail part 12, 12a a compression spring 21 is acting which strives to press the lower part of the carriage to the opposite end wall. The number of carriages on the rail part at one of the end walls on a given level corresponds to the number of carriages on the rail part at the other end wall on the same level. Between every two opposite carriages there is a crate 22 in which the elongate goods are intended to be placed.

The crate 22 can be shaped as an upwardly open box and has sockets 23 intended to co-operate with lifting means 24 connected to the wires 15. There is also a tongue 25 at the lower part of each end wall of the crate, and this tongue co-operates with the bent lower portion 19 of the carriage.

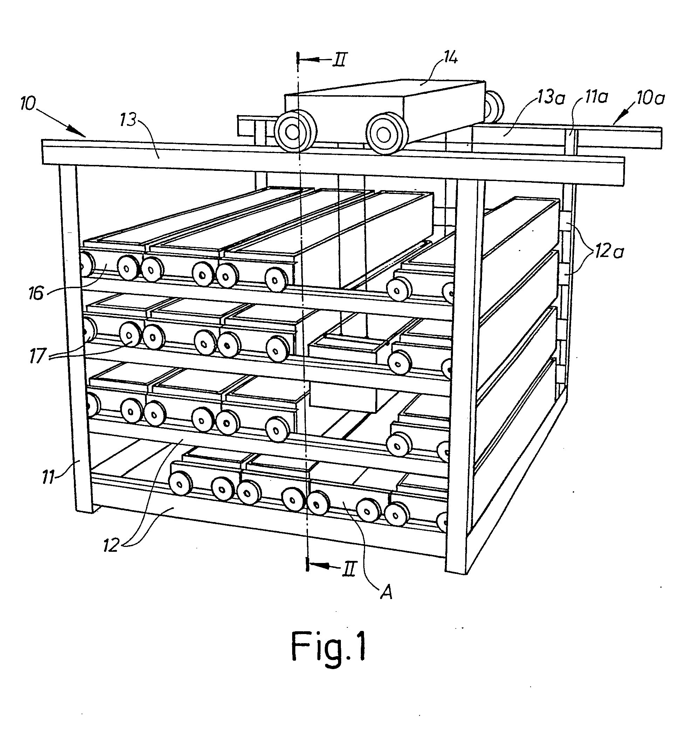

In order to pick up the goods from the position A of Fig. 1 the carriages on the levels above the level on which the goods are situated are moved to a position such that an opening is formed above the goods. Then the trolley 14 is placed immediately above the opening and the lifting means 24 are lowered and hook into the relevant crate, after which the latter is lifted vertically. During lifting the upper portion 20 of the carriage tilts outwards whereas the tongue 25 of the crate disengages from the bent lower portion 19 simultaneously as this portion tilts inwards in the direction of the other end wall. When the crate has reached its upper position the trolley is moved to the side of the system, after which the crate can be lowered and the goods be picked out. In a corresponding way the goods are inserted into the system, the crate 22 engaging with the carriage 16, 16a by the lower portion 19 of the carriage being pressed outwards by the crate until it engages the tongue 25 and the upper bent portion 20 of the carriage is pressed towards the end wall of the crate.

It should be observed that the carriages can be moved manually but that it is of course preferred to use electric motors in large systems for moving the carriages to the desired positions and also to use a computer system for the control of the movement of the carriages and the trolley with respect to the position of the goods to be picked out from respectively be inserted into the system. It is of course also possible to eliminate the carriages on the lower level and instead store the crates directly on the floor, in which case there can be one more crate on this level than there are carriages on the other levels. It should also be mentioned that it is possible within the scope of the invention to integrate the crates with the carriages, the goods then being lifted out from respectively being inserted into the crate concerned without removing the crate from the system.

4

## Claims

1.  A system for storing elongate goods, such as tubes, beams and the like, c h a r a c t e r i z e d  in that it comprises a rack having two separated end walls (10,10a) supporting several carriages (16,16a), one carriage at one of the end walls being intended to co-operate with an opposite carriage at the other end wall in order to support a crate (22) in which the elongate goods are stored, several carriages being placed beside and above one another on horizontal guides (12,12a) so that the crates form several lines and columns, and that above the rack a handling means (14) movable in the direction of movement of the carriages is arranged and can be brought in line with any selected column of crates in the rack and by separation of the carriages on the levels above the level on which the relevant goods are placed can lower a lifting means (24) in the opening formed and lift the goods, if desired together with the corresponding crate (22), and move it to a position outside the rack.

2.  A system according to Claim 1, c h a r a c t e r i z e d  in that the number of carriages on each level above the lower one is chosen such that the total width of the corresponding number of crates plus the width of an additional crate mainly equals the length of the guide (12,12a) on the level concerned.

3.  A system according to Claim 1 or Claim 2, c h a r a c t e r i z e d  in that the handling means (14) is a trolley supported by the two end walls (10,10a).

4.  A system according to any preceding claim, c h a r a c t e r i z e d  in that the crates (22) are releasably secured to the carriages (16,16a).

5.  A system according to any preceding claim, c h a r a c t e r i z e d  in that each carriage (16,16a) has means for receiving one end of a crate (22), these means comprising a holding means (19) which on lifting of the crate is moved inwards towards the opposite carriage and on lowering of the crate is forced outwards and engages with the crate.

6.  A system according to Claim 5, c h a r a c t e r i z e d  in that the holding means (19) co-operates with a pressing means (20) in such a manner that when a crate presses on the holding means the latter forces the pressing means to abut the crate (22) and locks it to the carriage (16,16a).

7.  A system according to any preceding claim, c h a r a c t e r i z e d  in that the lower line of crates rests directly on the floor or on supporting parts which are firmly connected to the end walls.

8.  A method of removing elongate goods, if desired together with a corresponding crate, from any selected position in a rack having two separated end walls with carriages which in pair support the crates with elongate goods, c h a r a c t e r i z e d  in that the crates are stored parallel to one another and are packed together beside and above one another so as to define lines and columns in the rack, and that the crates in all lines, possibly with the exception of one line, can be moved in the horizontal direction in order to form a vertical free space through which the elongate goods or the crate to be picked up from the relevant position is moved in the vertical direction by means of a lifting means before it is moved horizontally to a position outside the rack, in which position the goods are unloaded.

Fig.1

Fig. 2

Fig. 3

European Patent Office

**EUROPEAN SEARCH REPORT**

| | DOCUMENTS CONSIDERED TO BE RELEVANT | | EP 83850292.0 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - B - 1 218 352 (SALZGITTER STAHLBAU GMBH) <br> * Gesamt * <br> -- | 1,8 | B 65 G 1/10 <br> B 65 G 1/06 |
| A | US - A - 3 730 358 (OJI) <br> * Gesamt * <br> ---- | 1,8 | |

| | TECHNICAL FIELDS SEARCHED (Int. Cl. ³) |
|---|---|
| | B 65 G 1/00 |

The present search report has been drawn up for all claims

| Place of search | Date of completion of the search | Examiner |
|---|---|---|
| VIENNA | 29-02-1984 | PISSENBERGER |